# EUROPEAN PATENT APPLICATION

(11) **EP 2 043 346 A1**
(43) Date of publication of application: **01.04.2009**
(21) Application number: 07291172.0
(22) Date of filing: 28.09.2007
(51) Int. Cl.: H04M 3/523

(54) **Call center management system**

(71) Applicant: Alcatel Lucent, 75008 Paris (FR)
(72) Inventor: Cabasse, Gilbert, Alcatel Lucent, 75008 Paris (FR)
(74) Representative: Louiset, Raphael

(57) **Abstract**

Call center management system comprising:
- a call center agent database (**14**) including call center agent documents (**15**) each including a plurality of agent features responding to predetermined call center-oriented criteria;
- a call center management module (**17**) configured to:
■ interface the call center agent database (**14**) with a human resources management database (**11**) including human resources agent documents (**12**) each including a plurality of agent features responding to predetermined criteria including said call center-oriented criteria, and
■ synchronize the call center agent database (**14**) with the human resources management database (**11**).

## Description

### FIELD OF THE INVENTION

The invention relates generally to management systems for call centers.

### BACKGROUND OF THE INVENTION

An increasing number of companies throughout the world utilize fully or partly automated call distribution systems, also called call centers, which route interactions (inbound our outbound calls, chats, emails, sms, mms, etc.) between customers and human operators called agents, whose mission is to deal with the questions, orders and/or complaints of the customers.

Most modern call centers provide an automated preliminary scenario to the customer, including information and/or questions to be short answered by the customer in order to optimize distribution of the interaction to the suitable service. The interaction is then routed to an available agent belonging to the right service.

In order for the interactions to be serviced by the right agents, every hired agent must be first allocated to an appropriate service within the call center, depending of his skills (technical or lingual capabilities, experience, etc.).

Call centers are generally provided with management systems, which optimize agent utilization and contact center routing operations depending upon agent capabilities.

One may refer to the following documents: US patent publication No. 2007/038505 (Inquate), disclosing a "method and systems for workforce management"; US patent publication No. US2007121899 (Genesys Telecom), disclosing a "system and method for integrated resource scheduling, task allocation and agent work management" and US patent No. US6766012 (Concerto Software), disclosing a "system and method for allocating agent resources to a telephone call campaign based on agent productivity".

As large call centers include an important number of agents, each having peculiar skills which must be properly identified and memorized in a call center agent database, management systems generally provide configuration functionalities of agent skills.

As agents may quit their positions or enhance their capabilities, there is a constant need for the call center administrators to update the agent database, periodically and/or whenever needed.

The ordinary procedure for updating the agent database consists in manually creating/modifying/deleting agent profiles within the database, based upon the information provided by the agents, for example in their enrolment forms. Of course, this procedure is extremely time-consuming. This issue is critical, since the agent database is the only resource which is relied upon when routing interactions.

Accordingly, it is an object of the invention to respond to the need for optimizing management of the agent databases, thereby enhancing management of the call centers.

### SUMMARY OF THE INVENTION

Accordingly, according to one aspect, the invention provides a call center management system comprising:
- a human resources database including primary agent documents each including a plurality of agent features responding to predetermined criteria;
- a call center database including secondary agent documents each including a plurality of agent features responding to predetermined call center-oriented criteria selected among the criteria of the human resources database;
- a management module interfacing said human resources database and said call center database, said management module being configured to synchronize the call center database with the human resources database.

### BRIEF DESCRIPTION OF THE DRAWINGS

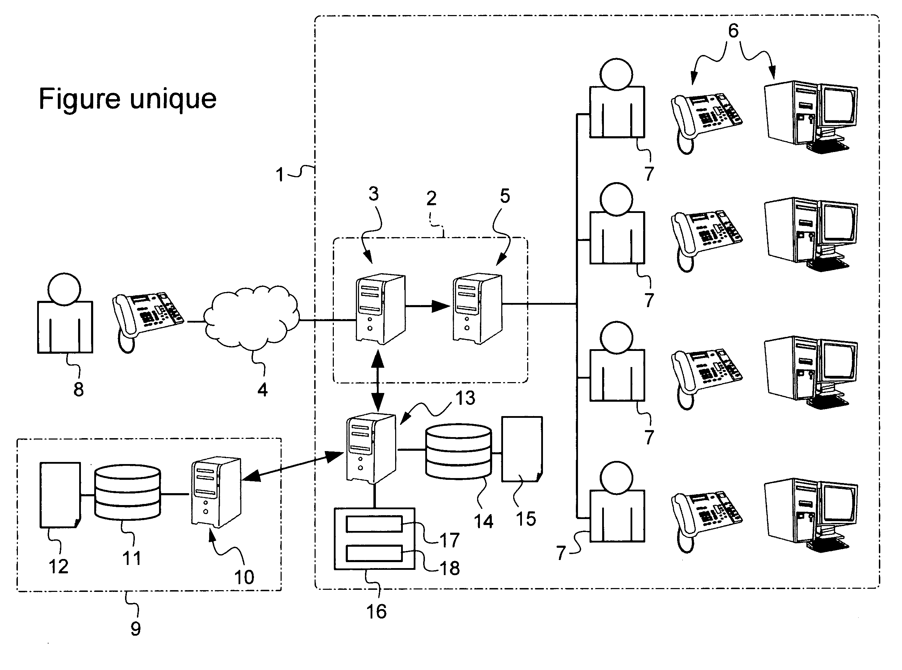

The above and other objects and advantages of the invention will become apparent from the detailed description of preferred embodiments, considered in conjunction with the accompanying drawing, which is a schematic view of a Call center workforce management system.

### DESCRIPTION OF PREFERRED EMBODIMENTS

Turning now to the accompanying drawing, there is shown a communication system **1** implemented as a call center comprising a central node **2** including a call server **3**, which is connected to an external network **4** such as the Internet or a PSTN (*Public Switched Telephone Network),* and a router server **5** connected to the call server **3**.

The router server **5** is connected, e.g. through Ethernet links, to a plurality of desktop terminals **6** such as computers or phones, before which human agents **7** belonging to the call center **1** are standing in order to deal with communications coming from/directed to a calling/callee part **8** (customer). Each agent **7** may be embedded in the premises of the call center **1**, or work as a telecommuter (whichever the location of each agent **7**, he or she is considered as belonging to the call center task force).

Each agent **7** of the call center **1** is identified in a human resources (HR) system **9** (which might include or consist in accounting/payroll functions) including a HR server **10** connected to or including a HR database **11** wherein HR agent documents **12** are memorized.

Each HR agent document **12** (e.g. under the form of an XML document) includes a plurality of agent features responding to predetermined HR criteria including basic information such as agent's name, first name, sex, age, family situation, hiring date, function, and also more specific information regarding the agent's skills and professional situation, which may be useful with respect of the agent's function inside the call center **1**: phone or SIP (session initiation protocol) number, email address and/or IP address of agent's desktop, language skills, technical skills, work group the agent **7** is allocated to.

The following table gives an example of the content of an HR agent document, wherein the agent's skills are evaluated in a 5-step scale (0=incompetent; 5=specialist).

| **Criteria** | **features** |
|---|---|
| Name | DOE |
| First Name | John |
| Sex | Male |
| Age | 31 |
| Family situation | Single |
| Hiring date | 30/09/2007 |
| Function | Call center agent |
| Phone/SIP number | +12345678 |
| Email address | mailto:Jd@callcenter.com |
| Language skills: English | 5 |
| Language skills: Spanish | 3 |
| Language skills: French | 0 |
| Technical skills | 5 |
| Work Group | Hotline |

The call center **1** also includes a call center management server **13** connected to or including a call center agent database **14** wherein call center agent documents **15** are memorized.

Each call center agent document **15** (e.g. under the form of an XML document) includes a plurality of agent features responding to predetermined call center-oriented criteria selected among the criteria of the HR agent documents **12**, including agent's name and first name, phone or SIP number, email address and/or IP address of agent's desktop, language skills, technical skills and work group the agent 7 belongs to.

The call center **1** further includes a call center management system **16** including a management module **17** which may be implemented as a software application in the call center management server.

The management module **17** is configured (i.e. programmed) to interface the HR management database **11** and the call center agent database **14** and to synchronize the call center agent database **14** with the HR management database **11**, whereby for each agent **7** a call center agent document **15** is created/updated/deleted in connection with the content of the HR agent document **12**.

Accordingly, it is no longer necessary for database administrators to manually fulfill criteria fields in the agent databases. Mistyping risks and low added-value tasks are therefore minimized.

In addition, the call center management system **16** may also include a configuration module **18**, which may be implemented as a software application within the call center management server **13**. The configuration module **18** has access to the call center agent database **14** and is programmed to automatically configure the call center agents' desktops **6** (phones or computers), using features contained in the corresponding call center agent documents **15**, such as "email address" or "IP address".

More specifically, the configuration module **18** may:
- achieve (without human intervention) distant install/updating/configuration operations of a suitable call center application to be daily used by the agents **7** on their desktops **6**,
- and/or send, via the agent's email address and upon changes affecting the agent within the call center:
   ■ technical instructions regarding installation, configuration and use of the call center application (e.g. providing a hyperlink to a distant application server wherefrom the call center application may be downloaded and installed), or event the application itself, to be directly installed on the desktop **6**,
   ■ and/or other useful information regarding the call center application (such as instructions of use or tutorials), or more general information regarding the call center work environment (such as tutorials on the relations with customers, work rules or instructions inside the call center, etc.).

Accordingly, it is no longer necessary for call center administrators to install manually the call center applications on the agents' desktops **6**, or at least to send manually the application/information messages. Some extra low added-value tasks are therefore cut, which enhances call center management productivity.

The configuration module **18** relies upon synchronization rules between the human resources database **11** and the call center agent database **14**, which rules can be edited on a user interface for use by the call center administrators.

Creation, updating and deletion/deactivation examples of call center agent documents **15** are given herewithafter, with assumption that amendments regarding call center agents **7** are implemented within the HR management database **11**, whereby synchronization is only achieved one way, i.e. the call center agent database **14** is updated according to changes having occurred within the HR database **11**. One shall understand that amendments may also be implemented first within the call center agent database **14**, whereby synchronization may be achieved the other way, the HR management database **11** being updated according to changes having occurred within the call center agent database **14**.

### Example 1: call center agent document creation

Agent John Doe has just been hired and only his HR agent document (see above) was implemented in the HR management database **11**, whereas no corresponding call center agent document exists yet in the call center database **14**.

The management module **17**, on a regular (scheduled) basis or upon activation by a call center administrator or upon notification by HR server **10** or call center management server **13**, interfaces the HR management database **11** and the call center agent database **14**.

During synchronization, the management module **17** checks the differences between the call center agent documents **15** and the HR agent documents **12**. In particular, the management module **17** senses John Doe's HR agent document **12** and reads that John Doe was hired as a call center agent. The management module **17** then extracts from the HR agent document **12** John Doe's features corresponding to the call center-oriented criteria. Thereafter, the management module **17** creates within the call center agent database **14** John Doe's call center agent document **15** including the extracted features, as listed in the following table:

| **Criteria** | **features** |
|---|---|
| Name | DOE |
| First Name | John |
| Phone/SIP number | +12345678 |
| Email address | mailto:Jd@callcenter.com |
| Language skills: English | 5 |
| Language skills: Spanish | 3 |
| Language skills: French | 0 |
| Technical skills | 5 |
| Work Group | Hotline |

### Example 2: call center agent document updating

Agent John Doe already works as a call center agent and a corresponding call center agent document **15** already exists in the call center agent database **14**. However, at least one feature regarding John Doe has changed in the HR management database **11**. For example, his French language skills have improved, whereby his evaluation has risen to 3:

| **Criteria** | **features** |
|---|---|
| Name | DOE |
| First Name | John |
| Sex | Male |
| Age | 31 |
| Family situation | Single |
| Hiring date | 30/09/2007 |
| Function | Call center agent |
| Phone/SIP number | +12345678 |
| Email address | mailto:jd@callcenter.com |
| Language skills: English | 5 |
| Language skills: Spanish | 3 |
| Language skills: French | 3 |
| Technical skills | 5 |
| Work Group | Hotline |

During synchronization, the management module **17** checks the differences between the call center agent documents **15** and the HR agent documents **12**. In particular, the management module **17** reads John Doe's HR agent document **12** and reads that his language skills are equal to 3 instead of 0. The management module **17** then updates within the call center agent database **14** John Doe's call center agent document **15**, replacing the expired value in John Doe's "Language skills: French" field, by the current one:

| **Criteria** | **features** |
|---|---|
| Name | DOE |
| First Name | John |
| Phone/SIP number | +12345678 |
| Email address | mailto:jd@callcenter.com |
| Language skills: English | 5 |
| Language skills: Spanish | 3 |
| Language skills: French | 3 |
| Technical skills | 5 |
| Work Group | Hotline |

### Example 3: call center agent document deletion/deactivation

John Doe, former call center agent, has quit. His HR database agent document **12** was canceled, but his call center agent document **15** still exists.

During synchronization, the management module **17** senses that John Doe's HR agent document **12** no longer exists, and therefore deletes John Doe's call center agent document **15** in the call center database **14**. Alternately, the management module **17** may only deactivate John Doe's call center agent document **15**, e.g. transferring the document **15** from a list of "active agents" to a list of "deactivated agents". Such a solution may be useful for statistical needs.

## Claims

1. Call center management system comprising:
- a call center agent database (**14**) including call center agent documents (**15**) each including a plurality of agent features responding to predetermined call center-oriented criteria;
- a call center management module (**17**) configured to:
■ interface the call center agent database (**14**) with a human resources management database (**11**) including human resources agent documents (**12**) each including a plurality of agent features responding to predetermined criteria including said call center-oriented criteria, and
■ synchronize the call center agent database (**14**) with the human resources management database (**11**).

2. Call center management system according to claim 1, wherein the call center management module (**17**) is capable of creating a call center agent document (**15**) based upon the content of a corresponding human resources agent document (**12**).

3. Call center management system according to claim 1, wherein the call center management module (**17**) is capable of updating a call center agent document (**15**) based upon the content of a corresponding human resources agent document (**12**).

4. Call center management system according to claim 1, wherein the call center management module (**17**) is capable of deleting a call center agent document (**15**) upon deletion of a corresponding human resources agent document (**12**).

5. Call center management system according to claim 1, wherein the call center management module (**17**) is capable of deactivating a call center agent document (**15**) upon deletion of a corresponding human resources agent document (**12**).

6. Call center management system according to claim 1, wherein the call center management module **(17)** is capable of updating a human resources agent document (**12**) based upon the content of a corresponding call center agent document (**15**).

7. Call center management system according to any of claims 1-6, further comprising a configuration module (**18**) providing synchronization rules between the human resources database **(11**) and the call center agent database (**14**), editable on a user interface.

8. Call center management system according to any of claims 1-6, further comprising a configuration module (**18**) adapted to configure a call center application on a distant agent's desktop (**6**), using features comprised in the agent's call center agent document (**15**).

9. Call center management system according to claim 8, wherein said features includes an IP address of an agent's desktop (**6**).

10. Call center management system according to any of claims 1-6, further comprising a configuration module (**18**) adapted to send the agent configuration elements and/or work instructions upon changes affecting the agent within the call center.
